# EUROPEAN PATENT SPECIFICATION

(11) **EP 2 232 437 B1**
(45) Date of publication and mention of the grant of the patent: **18.09.2013**
(21) Application number: 08859230.8
(22) Date of filing: 10.12.2008
(51) Int. Cl.: G06T 7/00

(54) **A COMPUTER IMPLEMENTED METHOD AND SYSTEM FOR REMOTE INSPECTION OF AN INDUSTRIAL PROCESS**
COMPUTERIMPLEMENTIERTES VERFAHREN UND SYSTEM ZUR FERNUNTERSUCHUNG EINES INDUSTRIELLEN PROZESSES
PROCÉDÉ MIS EN OEUVRE PAR ORDINATEUR ET SYSTÈME POUR UNE INSPECTION À DISTANCE D'UN PROCÉDÉ INDUSTRIEL

(30) Priority: 10.12.2007 US 996887 P
(43) Date of publication of application: 29.09.2010
(73) Proprietor: ABB Research Ltd., 8050 Zürich (CH)
(72) Inventor: PRETLOVE, John, N-1338 Sandvika (NO); SKOURUP, Charlotte, N-3021 Drammen (NO)
(74) Representative: Kock, Ina
(86) International application number: PCT/EP2008/067188
(87) International publication number: WO 2009/074600

(56) References cited:
- GEORGELI P ET AL: "An Industrial Augmented Reality Solution For Discrepancy Check" 13 November 2007 (2007-11-13), MIXED AND AUGMENTED REALITY, 2007. ISMAR 2007. 6TH IEEE AND ACM INTERNATIONAL SYMPOSIUM ON, IEEE, PISCATAWAY, NJ, USA, PAGE(S) 111 - 115 , XP031269883 ISBN: 978-1-4244-1749-0 abstract sections 1-6
- BLESER GABRIELE ET AL: "Real-time 3D Camera Tracking for Industrial Augmented Reality Applications" WSCG. INTERNATIONAL CONFERENCE IN CENTRAL EUROPE ON COMPUTERGRAPHICS, VISUALIZATION, XX, XX, 31 January 2005 (2005-01-31), pages 47-54, XP002415929
- HANEK R ET AL: "Yet another Method for Pose Estimation A Probabilistic Approach using Points, Lines, and Cylinders" 19990623; 19990623 - 19990625, vol. 2, 23 June 1999 (1999-06-23), pages 544-550, XP010347587
- NAVAB N: "Industrial augmented reality (IAR): challenges in design and commercialization of killer apps" 7 October 2003 (2003-10-07), MIXED AND AUGMENTED REALITY, 2003. PROCEEDINGS. THE SECOND IEEE AND AC M INTERNATIONAL SYMPOSIUM ON 7-10 OCT. 2003, PISCATAWAY, NJ, USA,IEEE, PAGE(S) 2 - 6 , XP010662790 ISBN: 978-0-7695-2006-3 sections 1, 2
- NAJAFI H ET AL: "Automated Initialization for Marker-Less Tracking: A Sensor Fusion Approach" 2 November 2004 (2004-11-02), MIXED AND AUGMENTED REALITY, 2004. ISMAR 2004. THIRD IEEE AND ACM INTE RNATIONAL SYMPOSIUM ON ARLINGTON, VA, USA 02-05 NOV. 2004, PISCATAWAY, NJ, USA,IEEE, PAGE(S) 79 - 88 , XP010769631 ISBN: 978-0-7695-2191-6 sections 1, 3

## Description

### TECHNICAL FIELD.

The invention concerns a computer implemented method for remote inspection of a process in an industrial installation. In particular the method is arranged for inspection of a process monitored and controlled by means of a distributed control system, or industrial control system, the process being typically in a facility for extraction, production, processing and/or transportation of materials and objects in industry, such as in the fields of oil and gas, pulp and paper, chemical processes and manufacturing.

### TECHNICAL BACKGROUND

In the field of process control in industrial plants there is a continual requirement for information about process equipment and process objects. Traditionally process monitoring equipment, temperature sensors, pressure sensors, flow meters and so on, are used to monitor and control a process such as in a paper mill, an oil extraction installation, or in a factory processing raw or semi-processed materials. As well as traditional sensors and instruments, video imaging may be used to provide a real-time image of an object or a process. Control rooms or operator workstations may be arranged with display screens showing CCTV images (closed circuit television) of one or more parts of an industriel plant. CCTV images may be displayed showing parts of a process line or process equipment. Traditional CCTV cameras provide the operators with a limited view of a process from one or more fixed points that are determined in advance.

The traditional Piping and Instrumentation Diagrams P&IDs, which represent the topology of the process, are used for operating the process. However, in order to monitor, inspect and/or control a process which is remote from where an operator is located, a P&ID diagram is not sufficient. To carry out remote monitoring or inspection of the process, the operators also need to be able to inspect the real process equipment. For example in large installation such as offshore platforms for oil and gas extraction, production, large areas or even a complete installation is often unmanned. This requires that operators will monitor, inspect and/or operate the process from a remote location, that is, that the operators have been moved away from the proximity of the real process. In a traditional manned installation today the operators in the field utilise all their senses in to obtain information about the state of the process and even to observe any changes that may not yet have been identified by the control system. In a remote installation or part of, since the operators have been moved away from the proximity of the real process, they will have a need for 'seeing and feeling' the process to be able to handle it in a proper way. In these remote facilities, or remote part-processes the operators need a support system to supplement process measurement with the process awareness information normally gathered by a person physically present on site. Radio contact between a field operator on-site and a remote operator in a control room is very often used in order to supplement the information available to the remote operator about a condition of a process.

Models of the installation and the process or process equipment have traditionally been used to assist an operator in understanding a process, layout of the process and relationship to other processes associated with a process. Today the physical layout of an industrial process or part of may be represented by using a computer generated 3D process model or a model based on a CAD representation, or by computer implemented simulations of a process.

An article by Bleser Gabrielle et al:Real-time 3D camera tracking for industrial Augmented Reality applications, Conference proceedings, 31 January 2005, pages 47-54, describes camera tracking using a CAD model to be tracked and a calibrated reference image of it.

In today's process plants, information is presented in a large number of different systems which are not integrated. The presentation of information often differs within these systems and even within a single system. The remote operator has to know where to find information about a process condition and how to find that information. The act of obtaining information about a condition of a remotely operated process may be time-consuming and may be error-prone. During times of emergency or other unexpected events the time taken to acquire information about a condition of a process may be crucial.

### SUMMARY OF THE INVENTION

According to an aspect of the present invention an improvement is described of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, wherein said method further comprises identifying a selected said part of the real said process infrastructure based on the selection of said representation on the 3D model, matching the selected said representation on the 3D model to a known position in said installation, superimposing one or more images of the said real process on top of an image of said representation from said 3D model and forming or combining graphically a display image comprising one or more images of the real process infrastructure or process equipment superimposed on and combined with the image from said 3D model.

According to an embodiment of the present invention an improvement is provided in the form of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said representation from said 3D model, forming or combining graphically a display image comprising one or more images of the real process infrastructure or process equipment superimposed on and combined with the image from said 3D model, wherein said method further comprises receiving part of a real image and superimposing the real part image so received on corresponding parts of the model image, thus graphically blending and displaying parts of the real image superimposed on parts of model image, and the whole combined in the display image.

According to an embodiment of the present invention an improvement is provided in the form of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said representation from said 3D model, forming or combining graphically a display image comprising one or more images of the real process infrastructure or process equipment superimposed on and combined with the image from said 3D model, wherein said method further comprises providing graphic data forming part of at least one of the one or more images of the real part of process infrastructure or apparatus from a stored image. Alternatively or as well said method may further comprise providing at least one of the one or more images of the real part of process infrastructure or apparatus from an image made in real time.

According to an embodiment of the present invention an improvement is provided in the form of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said representation from said 3D model, forming or combining graphically a display image comprising one or more images of the real process infrastructure or process equipment superimposed on and combined with the image from said 3D model, wherein said method further comprises matching the selection of said representation on the 3D model to the known position by calculating a calculated or transformed position based on the viewpoint in the 3D model of the selection of said représentation on the 3D model.

According to an embodiment of the present invention an improvement is provided in the form of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said representation from said 3D model, forming or combining graphically a display image comprising one or more images of the real process infrastructure or process equipment superimposed on and combined with the image from said 3D model, wherein said method further comprises calculating a calculated or transformed position of the selection of said representation on the 3D model image based on any information from the group of: a position in three dimensional space, an orientation, a line of sight of the camera, a position in three dimensional space of a structure, a distance between a camera and a process object, or of a robot manipulator, on which the camera is arranged.

According to an embodiment of the present invention an improvement is provided in the form of a method for remote inspection of infrastructure, of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said representation from said 3D model, forming or combining graphically a display image comprising one or more images of the real process infrastructure or process equipment superimposed on and combined with the image from said 3D model, wherein said method further comprises matching the selected said part of process infrastructure or apparatus based on the manipulation or selection of the 3D model to information about the position or location of the real part of process or apparatus to position information held by said control system. Alternatively or as well said method may further comprise matching the selected said part to the position or location of the real part of process or apparatus by means of information held by a software process object of the part of process or apparatus implemented by said control system.

According to an embodiment of the present invention an improvement is provided in the form of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said representation from said 3D model, forming or combining graphically a display image comprising one or more images of the real process infrastructure or process equipment superimposed on and combined with the image from said 3D model, wherein said method further comprises controlling one or more cameras of the industrial process to focus on said part of process infrastructure or apparatus at the position matched to information held by a software process object in said control system.

According to an embodiment of the present invention an improvement is provided in the form of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said representation from said 3D model, forming or combining graphically a display image comprising one or more images of the real process infrastructure or process equipment superimposed on and combined with the image from said 3D model, wherein said method further comprises calculating from a position or line of sight or viewpoint in the said 3D model, a line of sight or the position or location for one or more cameras in order to focus on the real part of process infrastructure apparatus.

According to an embodiment of the present invention an improvement is provided in the form of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said représentation from said 3D model, forming or combining graphically a display image comprising one or more images of the real process infrastructure or process equipment superimposed on and combined with the image from said 3D model, wherein said method further comprises calculating from the position or line of sight or viewpoint in the said 3D model and the manipulation or selection of the 3D model a line of sight or the position or location for one or more cameras in order to focus on the position or location of the real part of process infrastructure or apparatus. Advantageously said method may further comprise generating a signal to control one or more cameras to point at the position or location of the real part of process infrastructure or apparatus and make an image. Alternatively or as well said method may further comprise matching the real image data to the 3D image by means of finding features in the real image and calculating which part of the 3D model image the real image is a picture of, the features being any from the group of: lines, edges, points, corners.

According to an embodiment of the present invention an improvement is provided in the form of a method for remote inspection of infrastructure of an industrial process in an installation for extraction, processing and/or production of materials which said process is supervised by means of a control system arranged with one or more computers, and one or more computer display apparatus, wherein a said computer is arranged with a graphic computer 3D model of a said process infrastructure, said method comprising the steps of selecting in the 3D model a representation of a part of a said process infrastructure for inspection, and superimposing one or more images of the said real process on top of an image of said representation from said 3D model, forming or combining graphically a display image comprising one or more images of the real process infrastructure or process equipment superimposed on and combined with the image from said 3D model, wherein said method further comprises calculating where the real image data points are, a position in 3-dimensional space, based in part on information about a line of sight between a camera and the real part of process or apparatus. Advantageously said method may further comprise displaying a historical or archived real image graphically superimposed or overlaid or combined with the 3D image wherein the non real-time real image is presented in a visual mode graphically processed to make a contrast to a normal photo-realistic real image, which may processing be a change in any from the group of: hue, contrast, brightness, number of colours.

This invention extends to include a 3D model of the complete process with navigation, image blending and context sensitive interaction. Process views in an installation in the 3D model views are blended with real video or camera images, recordings or recorded images from the process. The operator utilises a 3D process model to move a camera, or other sensor. When the camera is in the same position in the real installation as the viewpoint in the 3D model, the 3D model view is faded out with the real video image of the real process, in full or in part.

This invention also brings the CCTV, or similar cameras, into a natural logical interface, which is the 3D world. The operator can control the cameras with (almost) no constraints when the cameras are movable. The operator utilises the 3D model to determine the specific viewpoint of the camera. The system comprises a 3D model/CAD model of the physical process. This 3D model may be the same 3D model as one that was generated during the design and engineering phase of the installation. The 3D model is connected to the DCS distributed control system) so that objects in the 3D model are linked to the same objects in the DCS. In addition, real images and/or video recordings from the plant are used. Cameras that capture such images are either located at fixed positions in plant, with the possibility to pan, tilt and zoom (typically CCTV cameras), or they are mounted on robot manipulators, which will move them around in the plant.

The 3D model and the real images are integrated into one system to make up a 'remote inspection system for critical infrastructure'. The operator uses the 3D process model to navigate to a certain object in the process that he wants to inspect, monitor, collect information about, or to otherwise interact with. xxx To do this, the operator may retrieve a context sensitive menu or a task list related to this object, based on the integration with the DCS, from which the operator can select predetermined tasks such as inspections and data collection, for example, in the form of and/or retrieving an image/video recording from the real plant of the same object. Alternatively or as well, the operator can control the camera view manually in the 3D model and retrieve an image or video recording from the real plant. The viewpoint of the 3D model will be the same as for the camera which returns an image or live video recording from a line of sight in the real process that corresponds with the viewpoint in the 3-D model. The operator utilises this system as the 'eyes of the field operators' for inspection of the infrastructure.

According to an aspect of the present invention an improvement is described of a remote inspection system in an installation for extraction, processing and/or production of materials including infrastructure of an industrial process which said process is supervised by means of a control system arranged with one or more computers, and one or more computer display apparatus, wherein a said computer is arranged with a graphic computer 3D model of a said process infrastructure, the computer being arranged for selection of a representation of a part of a said process infrastructure, wherein said system further comprises a computer or data processing apparatus programmed for identifying a selected said part of the real said process infrastructure based on the selection of said representation on the 3D model, a computer or data processing apparatus programmed for matching the selected said representation on the 3D model to a known position in said installation, and a computer or data professing apparatus programmed for graphically combining one or more images of the said real process superimposed on top of an image of said representation from said 3D model and forming a display image comprising one or more images of the real process or process equipment superimposed on and combined with the image from said 3D model.

This integrated system may comprise the following elements:
The (remotely located) operator utilises the 3D process model to move around in a 3D model of the process in a virtual world, navigation. As the operator moves around in the 3D model he changes his viewpoint in the model. The location and orientation of the camera view of the real process is similarly changed according to the viewpoint in the 3D model so as to match the line of sight of a camera in the real installation to a viewpoint in the 3D model. The 3D model is a representation of the real process and the operator can easily decide the relevant viewpoint from which a camera image of the real installation shall be made. Outside in the plant either a fixed camera (if a predefined viewpoint is selected) or a manually defined viewpoint is selected and/or maneuvered so as to return an image, or video recording, from the real process.

The 3D process model is interactive in the sense that information from the DCS system is linked to the relevant objects in the 3D model. The 3-D model is arranged for Context sensitivity by means of a connection to live plant data from the industrial control system or DCS. The operator can, using any computer input means, select an object in the 3D model and get a context sensitive menu or a task list which may include options such as: show live data from the process, show data from a previous inspection, show data from a predefined inspection (and/or light maintenance), show tasks and trends. When an image, or video recording, of the real process is presented instead of the 3D model, this image (or video) is arranged for display with the same computer implemented options for retrieving and displaying context sensitive information activated by a selection on the display screen, or other computer input methods or device, as from the 3D model. This is made possible because the superimposed real images are, so as to say, integrated in the 3D model, and selections on the display screen, or other computer inputs, are matched and associated in some way with process equipment shown. The positions of the camera viewpoints are known as well as the layout of the plant (for example from the 3D model). Selecting an object such as a tank in the real image will result in a similar context sensitive menu as from the 3D model. The operator can initiate the same tasks from the 3D model and the images/video recordings.

Also, this invention will allow the operator to have integrated operator control consisting of one single interface from where he can do all his inspection tasks in an intuitive and natural way. The operator moves to an object at a certain physical location in the 3D model and initiates inspection tasks for this specific object linked to a model of the entire plant. Also, he will get a real image or a video recording of this object as part of the inspection if needed. The invention contributes to increased safety for personnel by reducing the need for engineers or technicians to visit the site.

In addition to the use of CCTV cameras and video cameras, the invention also provides for using image input from a camera or sensor adapted to light sources other than for wavelengths within the normal visible light spectrum. Such a camera or sensor may be adapted to provide an image of an apparatus which is provided for example, by thermal imaging or night vision imaging

In a preferred embodiment of the methods of the invention one or more methods may be carried out by a computing device comprising one or more microprocessor units or computers. The control unit(s) comprises memory means or a memory storage device for storing one or more computer programs or a software listing comprising a set of operating instructions for carrying out the improved methods. Preferably such computer program contains instructions for the processor to perform the methods described herein.

### BRIEF DESCRIPTION OF THE DRAWINGS

Embodiments of the invention will now be described, by way of example only, with particular reference to the accompanying drawings in which:

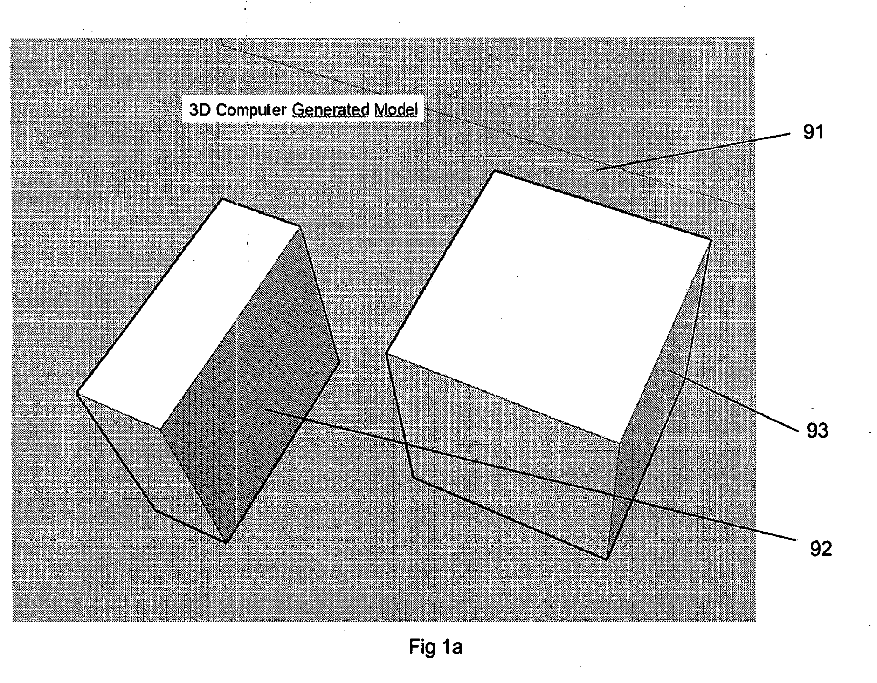

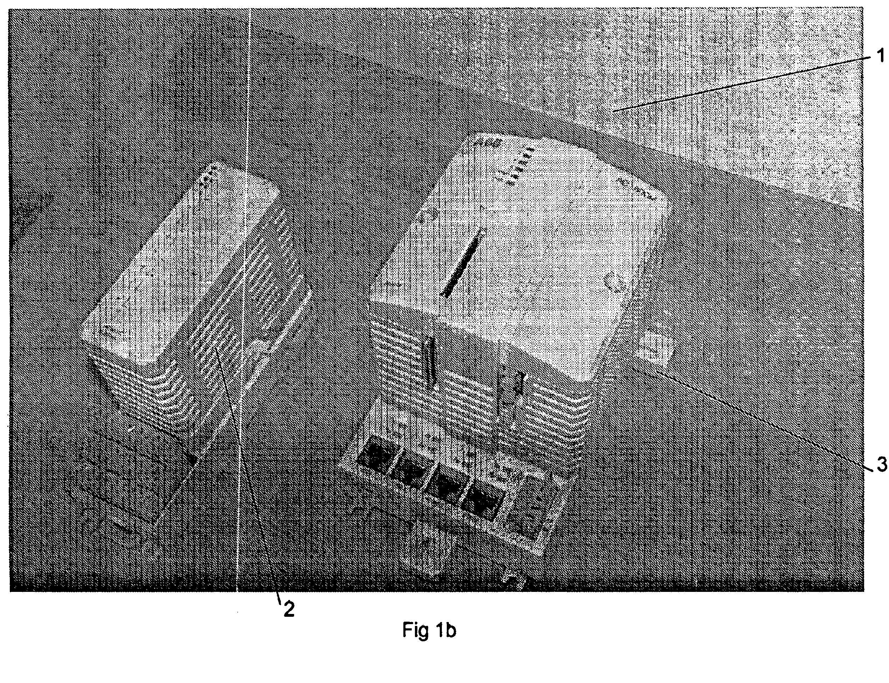

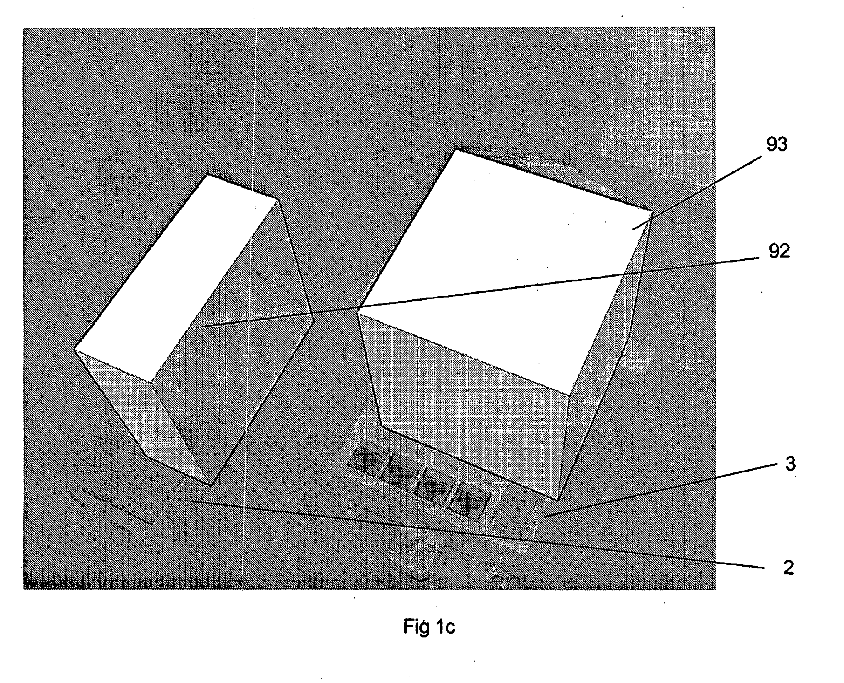

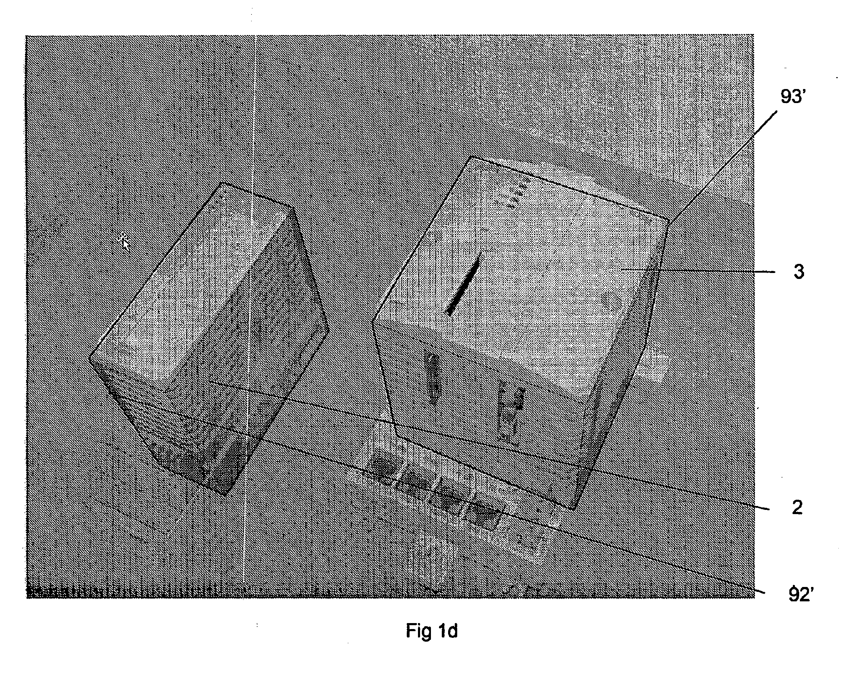

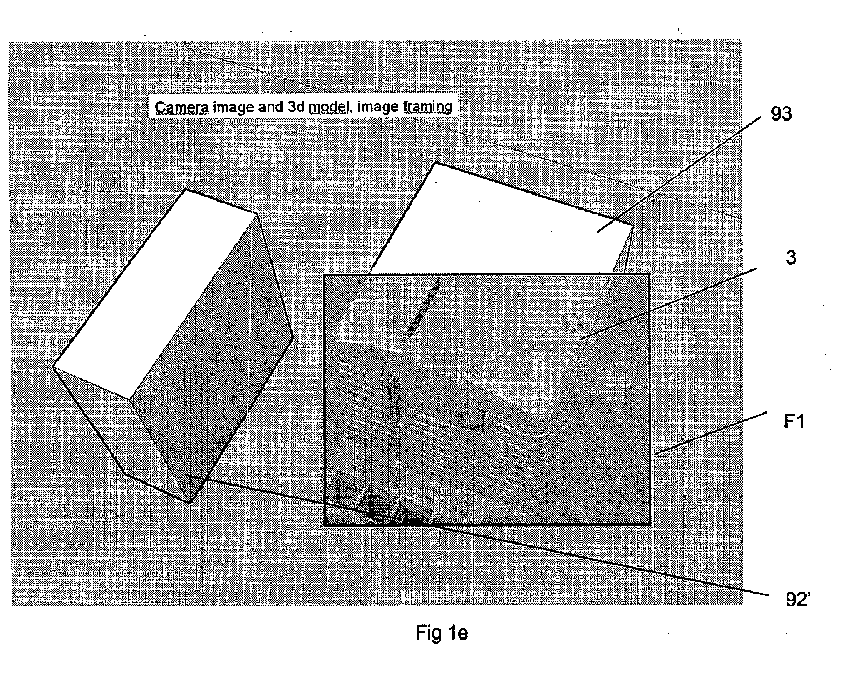

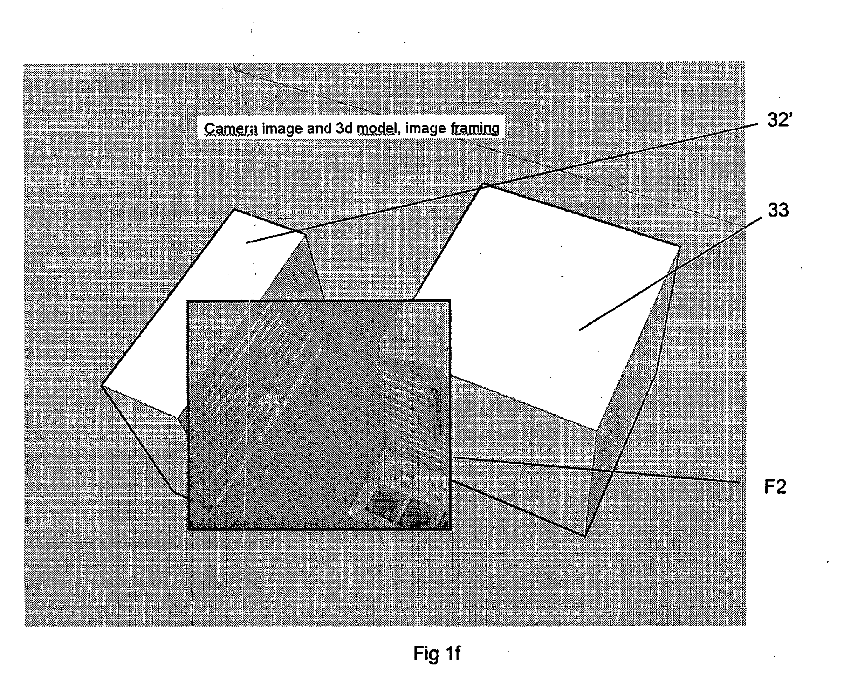

FIGURES 1a-1f are schematic diagrams of an invention according to the independent method claim 1 in which images of a real process are combined with an image of a 3D model according to an embodiment of the invention; and wherein Fig 1a shows the 3D model only, Fig 1b shows an image of the real installation, Fig 1c shows an image of the 3-D model superimposed over part of the image of the real process; Fig 1d shows an image of the real installation with part images from the 3D model superimposed; Fig 1e shows a first frame comprising an image of part of the real installation superimposed on the 3D model; Fig 1f shows a second frame comprising another image of part of the real installation superimposed on the 3D model;

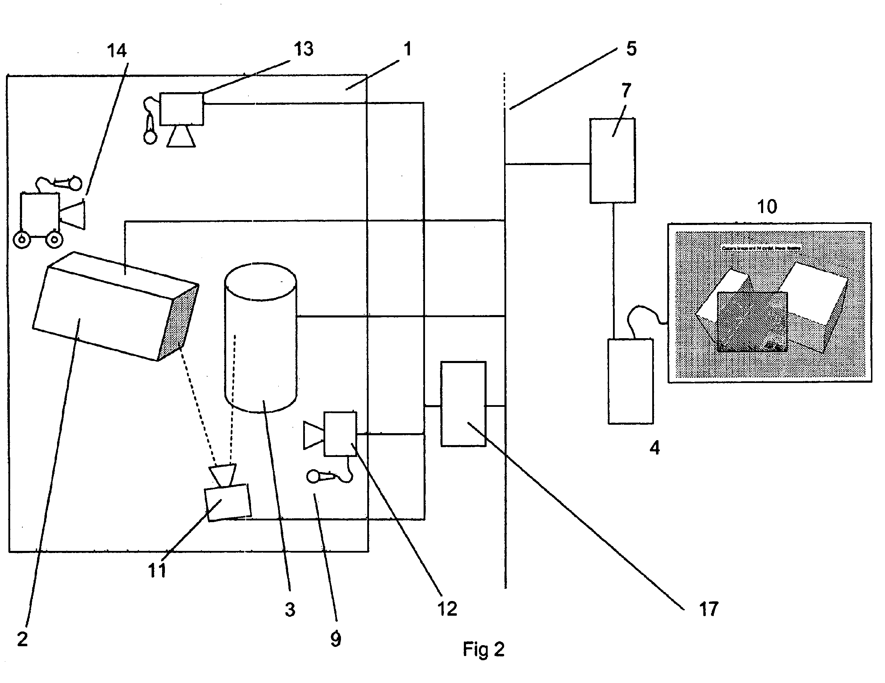

FIGURE 2 is a schematic block diagram of the invention according to Claim 1 wherein the system of making images in the real installation and combining the resulting real images with an image of a 3D model are more specifically described according to an embodiment of the invention;

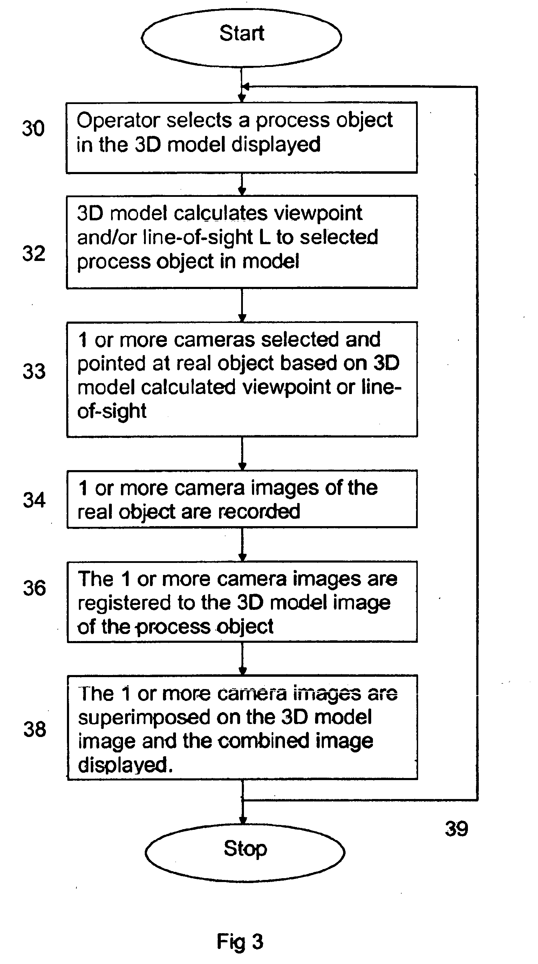

FIGURE 3 is a flowchart showing use of the invention according to Claim 1 wherein steps of a method for combining part of a real image with a 3D model are described according to an embodiment of the invention;

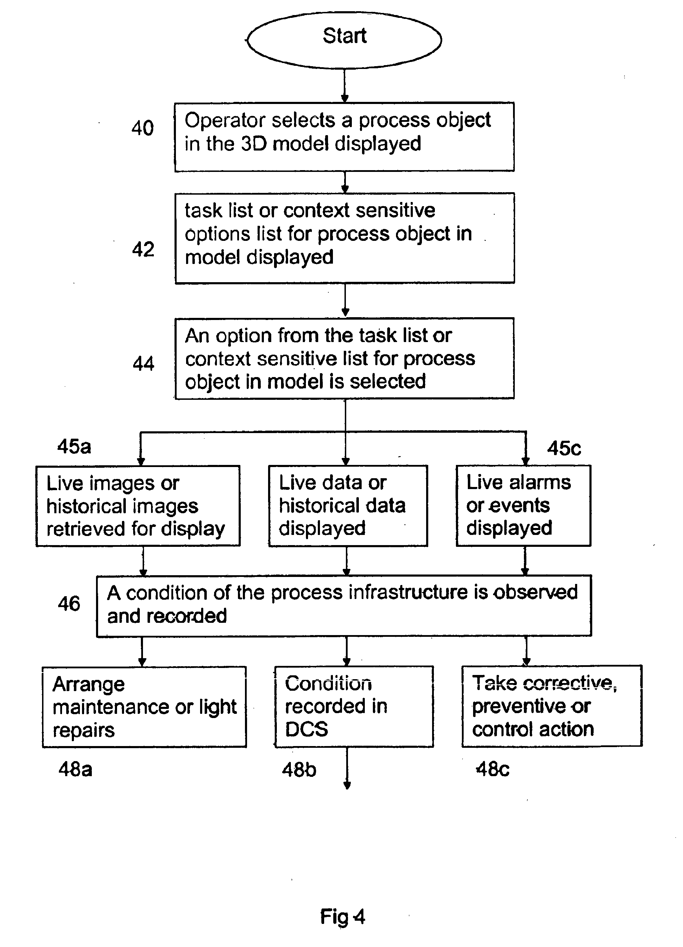

FIGURE 4 is a flowchart showing use of the invention according to Claim 1 wherein steps of a method for combining part of a real image with a 3D model are described according to an embodiment of the invention wherein the method is specifically described in respect of activating a task list from a display combining a real image and the 3D model image;

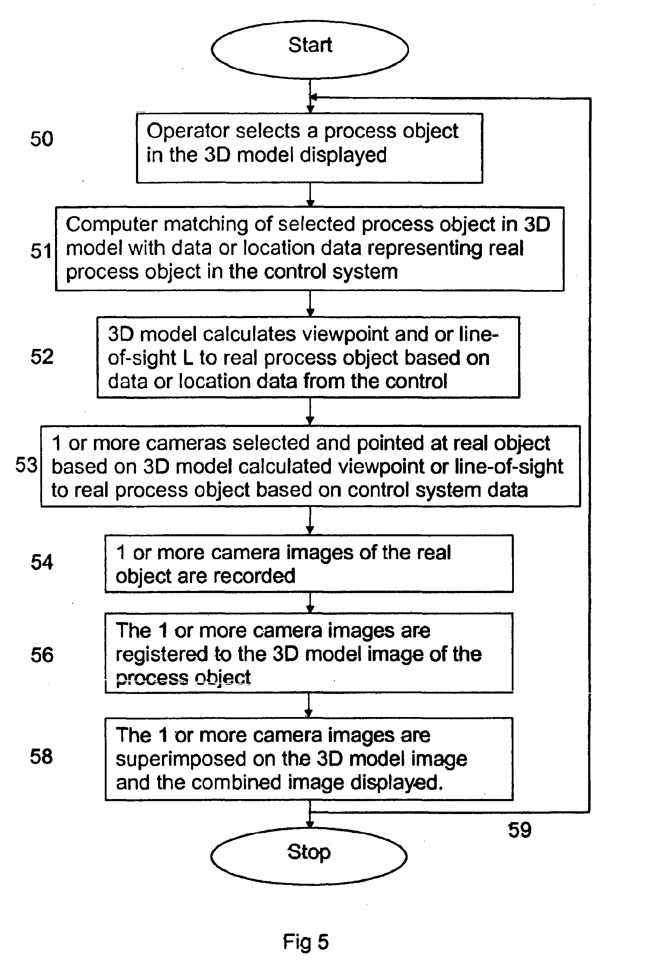

FIGURE 5 is a flowchart showing use of the invention according to Claim 1 wherein steps of a method for combining part of a real image with a 3D model are described according to an embodiment of the invention wherein the method is specifically described in respect of calculating a position in the real installation based on data held about a viewpoint and/or position in the 3D model;

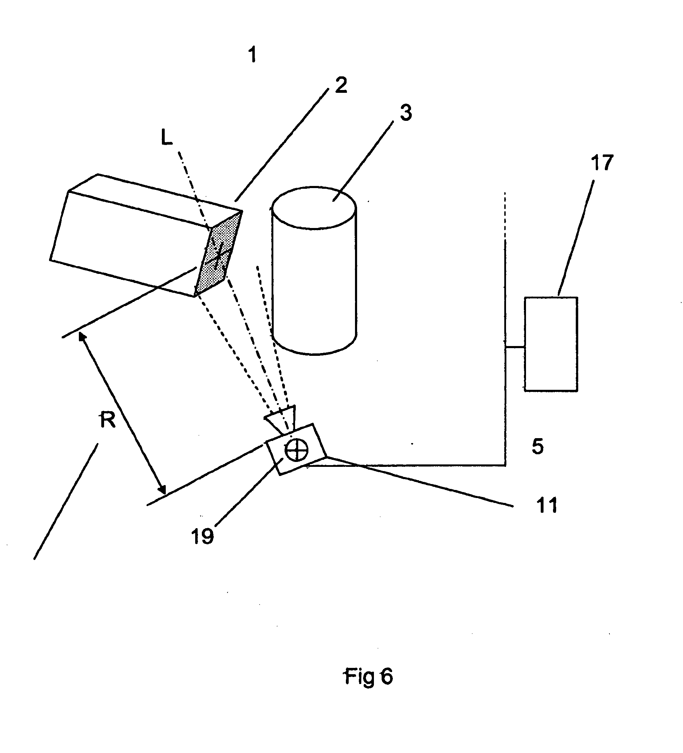

FIGURE 6 is a schematic detail for part of a diagram of the invention according to Claim 1 wherein the system of making images in the real installation and combining real images with an image of a 3D model are more specifically described according to an embodiment of the invention.

### DETAILED DESCRIPTION OF THE EMBODIMENTS

This invention describes a method and a system for remote inspection of infrastructure, and in particular critical infrastructure in a process such as equipment, instrumentations and utility systems in a process or a part of a process. The system makes use of a 3D model/CAD model of the physical process, preferably the same as or derived from a 3D model that was generated during the design and engineering phase. The 3D model is also connected to the DCS (distributed control system) or an industrial control system so that individual graphic objects in the 3D model are linked to or in some way associated with the software control objects in the DCS representing and connected to the individual real objects, valves, sensors, tanks, columns, pipes etc. in the real installation. In addition to the 3D model, real images and/or video recordings from the plant are used. The cameras may be located at fixed positions in plant, with the possibility to pan, tilt and zoom (typically CCTV cameras). Cameras may also be mounted on robot manipulators, which move them around in the plant or installation. A camera mounted on a robot or manipulator arm can be moved with a high accuracy and also the position of the camera at any time can be found accurately based on the movements of the robot and/or movement of the various joints of the manipulator arm.

Figure 2 shows a system according to the invention in a schematic diagram. It shows a real plant or installation within the box 1 with real process objects 2, 3 and a data network 5 and a control system or DCS 7. It also shows four cameras 11-14, of which one camera 14 is arranged on a moveable apparatus such as for example on a manipulator of a robot (not shown). One or more of the cameras may be arranged with a microphone 9 or other sound gathering device. The cameras are preferably connected to and controlled by a camera control subsystem 17, which may also connected to the DCS 7. The system also includes a workstation or control room with at least one image display 10 on which is displayed a view of a 3D model 4 of the process. The 3-D model 4 runs on a computer of some sort. Images of a real process object 2, 3 in a real installation 1 are made by cameras 11-14 and input to the camera control system. The camera control system controls the movement, focusing, pan and tilt etc. of the cameras 11-14 and also handles the optical or video signals returned by the cameras. Image input is sent via a data network to the 3D model 4. Signals output from the 3D model may be sent directly via the camera control system 7 to steer the cameras 11-14; optionally the signals may be processed by a module of the DCS and data from the 3D model, eg viewpoints, position and selection on the model, then matched to software control objects in the control system and data associated with those objects held by the DCS 7.

The operator, eg viewing image display 10, utilises the 3D process model 4 to navigate to a certain object that he wants to inspect or interact with. Figure 3 shows a flowchart of steps in the general method in which steps:
- 30: Operator selects on the image display 10 a part of the process of interest in a process as shown by the 3D model 4,
- 32: The 3D model calculates viewpoint data associated with or defining the process part so selected in the 3D model,
- 33: One or more cameras are selected and pointed at the real object 2, 3 in the real installation 1 along a line of sight L which is dependent on, or calculated from, or transformed from viewpoint data generated by the 3D model,
- 34: One or more camera or video images 92, 93 shown in Fig 1a of the real objects 2, 3 shown in Figs 1b are generated and recorded
- 36: The one or more images are registered to the 3D model image of the process
- 38: The one or more video or camera images are superimposed on the 3D model image to a certain extent and the combined image comprising real and 3D model graphics displayed as shown in Figs 1c-1f
- 39: Steps of the method are repeated as required.

The combined image displayed consists of parts of a real image superimposed over a view of the 3D model. The 3D model and the real images make up the 'remote inspection system for critical infrastructure'.

This method and system for inspection of a process has the advantage of being easy to navigate in and also forms a single system for information gathering. The interface is a relatively natural interface, easy to use, easy to understand, and the real or modeled objects are displayed arranged in a context sensitive way. Another advantage is that movements of the model and images obtained may be logged and provide an audit trail.

Figure 6 shows schematically a camera viewpoint in the real installation 1. Camera 11 in the real installation 1 is focused on a part of a real process object 2. There is a line of sight between the camera and the part of the process object focused on, which is shown schematically by line L made up of alternate dashes and dots. The distance between the camera and the part of the process object focused on is indicated as R in the schematic diagram. A viewpoint from the 3D model to a selected position in the 3D model is used to provide position information in the real installation so that a camera 11 can be moved to point along the line of sight L in the real installation which corresponds with the viewpoint in the 3D model. The position information may be calculated from position data in the 3D model based on a calculation, a transformation, based on real plant information held by the control system about a position in the real process and the objects at that Position; or by a combination of these methods.

The operator can also either retrieve a context sensitive menu/ task list related to this object (based on the integration with the DCS), or an image/video recording from the real plant of the same object/from a line of sight corresponding to the same viewpoint in the model. In one list the options might be: show live data from the process, show data from a previous inspection, show data from a predefined inspection, show data from a test, show data from a minor or light maintenance work order, show tasks and trends. The viewpoint in the image display of the 3D model is arranged according to the invention to be the viewpoint in the real process or installation from which the camera is to return an image or live video recording from the real process. The operator utilises this system as the 'eyes of the field operators' for inspection of the infrastructure. Figure 4 shows a flowchart for the steps of a method in which, for example, a task list or one or more items of context information can be generated for a selected process object in the 3D model.

At Step 46 it is shown how, for a selected process object, live real time or stored images 46a of the real process object may be selected and retrieved for combination into the image display; and/or live data 46b or historical data relevant to the process object may be selected, obtained and displayed. An alarm list 46c may be displayed with live and/or canceled alarms or events for the process object or for a process section containing the process object.

Many different types of information are obtained using CCTV or other cameras once the process part of interest has been located in the real installation using the 3D model. The part of the real process of interest is remotely inspected by an operator and a condition of the process infrastructure is observed and recorded. The condition may also be used as a basis for further inspections or tests. The condition may further be used as a basis for carrying out light repairs, maintenance or corrective action such as closing valves, change a battery, exchanging small parts, and the like. The information gathered by inspection may comprise visual information from the real images of, for example, expected release of gas or fluids, unexpected release such as leakage of gas or fluid, spillage of solid or fluid material; inspection for surface contamination for example such as due to saltwater or live organism from the sea, signs or indications of physical damage to a surface or a structure. Physical damage may be any of storm damage, damage due unexpected level changes or pressure changes in a pipe or vessel; corrosion damage, damage due to an unplanned rise in temperature or fire damage.

The view of the 3D model, which the operator navigate within, is the basic view of the process and is presented in a relatively large window. The window containing the real image, image/video framing, may result in a frame of the image/video which can take any size (1-100%) related to the size of the 3D model view and is presented within the 3D model view. In case the image/video frame is 100%, the image will replace the 3D model view completely and be an exact 'copy' of the 3D model viewpoint. In case the image/video frame is of any size between 1-99%, it will be presented in a frame within the 3D model view with the 3D model view as the 'background'. Whenever the operator starts to navigate, the frame itself will remain at the last position whereas the 3D model view will change. When the operator is satisfied with the new viewpoint, the system may either automatically, after a certain time delay, update the frame with the real image/video of the process, or the operator will have to initiate the update, for example, from a context sensitive menu / task list. The frame with reduced size will be 'hanging' in the 3D model world until a new viewpoint is found and confirmed (either automatically or based on manual confirmation / input). The operator can change the size of the image/video frame at any time . Figure 1e shows a view in which a real image of part of the process, part of process object 3, is superimposed over the correct position on the 3D process model and the remainder of the 3D model remains in view. Figure 1f shows schematically how moving the viewpoint in the 3D model from, say the first position F1 shown in Figure 1e, results in obtaining a real image from the second position frame F2 taken along a second line of sight, as shown in Figure 1e. Subsequently image data from other cameras may also be superimposed on the view. For example, after a time interval during which a second camera has been moved, for example a CCTV camera has been panned, or tilted or zoomed, or a second camera on a manipulator brought into position, real images relevant to the current view, the scene as determined based on the viewpoint in the model, may also be faded up in the display image in addition to the real image from the first or second position. This feature may also be extended to include predefined viewpoints of the process with images/videos from a historical image/video bank. This approach can also be described as a way to move or operate a camera. A viewpoint is obtained and selected in the 3D model. One or more cameras are then moved, panned, tilted etc so that they then point along the desired line of sight, and focus on the process object. In the case where a camera is moved or held by a manipulator arm or robot, the robot may be driven by manipulation of the 3D model to determine where the robot shall point the camera.

The display image when it includes real image/video may be shown with a varying degree of blending between the 3D model and the 'real' image. In case the ratio is 100%, only the 3D process model is shown. Similarly, a ratio of 0% is photorealistic quality and only the image/video is shown in place of the 3D model. See Figure 1a, showing schematically a view with 100% ie only the 3D model. Figure 1b shows schematically a view of 0% ie only the real image, camera image, is shown. In Figures 1c, 1d a reduced amount of the 3D model image is shown, perhaps 60% and 10% respectively.

The transition between the 3D model and the image may be carried out in different ways. A transition method may be chosen so that the visual change observable to an operator shall be more or less obvious. When using for example a 'fade in' or 'fade-out' between the two media, there are at least two different ways that the invention may present the transition:
1) small steps/changes will take place within the video mode whereas large steps will take place in the computer graphic world of the 3D model. The image of the 3D model will be faded out when a fixed or steerable CCTV camera is in position, or when a camera mounted on a robot is in place at the new position and ready, and then the video recording is faded in;
2) navigation will always take place in the 3D computer graphics, and the image/video mode with images of the real installation will be faded in when ready.

When the blending, or mixing of sources, is between 1-99%, the 3D model will be seen more or less through the image/video depending on the ratio. There may be different reasons for using a high percentage of the 3D model (∼50-99%) such as poor quality of the image/video and hence the need to support understanding of the images. Blending the two media with a high degree of the 3D process model in this way allows the operator to compare the two worlds and quite easily detect corrosion, fire damage, missing equipment, for example, fire extinguisher, safety guard rails, etc. in the real world.

Blending the two media with a low degree of the 3D model (1-49%) allows the system to show specific information from the 3D model such as pipe layouts, electrical wiring, safety systems, etc. Also, different layers of information such as different utility systems, specific fluids or alarms can be visualised using information and visuals from the 3D model as a blending between the computer graphics model (3D) and the real image/video. Other examples are:
Flowing fluids, or those with a certain flow, temperature, etc. Flashing alarms and/or warnings
Just one particular fluid (for example, oil or gas)

Preferably the model is arranged with graphic presentation adjustment control means so that an operator examining the image display 10 may manually select to change: higher/lower contrast of the 3D model image blending in the image display; exchange one or more colours of the 3D model image for other colours, and so on.

Maintenance notes, observations can be recorded by an operator or made as a graphic version of a note or sticky note. The latter represents more intelligent layers, or augmented reality (AR), overlaid the real world represented by images/video recordings from the real process.

Field operators or technicians on a field visit utilise all their senses when they inspect the process. Images or video recordings represent the field operators' eyes. In addition, the remote inspection system described may also be extended to include microphones 9 fixed in place or carried around by mobile equipment 14, especially the robot manipulators, within the real process. Hence, the remotely located operators can also get information in the form of the sounds from the process as a feedback on process condition, and use this information together with other inspection data to inspect the process and possibly diagnose a condition of the process.

In an advantageous embodiment the 3D process model may comprise a number of predefined viewpoints (either related to the fixed cameras or waypoints for the robot to move to with the camera mounted on the manipulator arm). A database containing a historical image/video bank may capture and store images or video clips, which show normal situations and abnormal situations. This historical bank, or archive library, functions as a diagnostics tool which the operator can chose to use and compare with images of the current situation. In an advantageous development, the non-real time images, the archive images/video clips may be presented, displayed and shown in a way that identifies that the images are not real-time. For example stored or archived image data may be presented as black & white (B/W) images, blurred, sepia or using other means to indicate that these are historical images/video clips. There may be an option in the 3D model to visualise predefined viewpoints, the frame of historical images, etc. The real-time super-position of the real image or stored image on top of the 3D model may be changed or varied, so that a 3D model generated graphic is superimposed over a real time or stored real image. The 3D model has, as mentioned above, means to show graphics from the 3D model in the form of layers superimposed on top of each other. The real image may be superimposed on layers of the 3D model image, and optionally the 3D model or layers of may be superimposed on top of a real image or stored image of the real process. Thus, different layers of information about the process such as different utility systems, steam, air, specific fluids etc. or alarms can be visualised using information and visuals from the 3D model as a blend of the computer graphics model (3D) and the real image/video. An advantage of this aspect of the invention is that it is simple for the operator to compare real time images and historical images and easy for the operator to distinguish between the graphically processed historical images and a real time image.

In another embodiment information from the control system about the location of a process object, or equipment in the process, or equipment close to the process is used to calculate a position or location in the real installation. When a part of the 3D model image is selected, the 3D model matches the selection to an ID or software object identifier, or other identifier to a process object in the real installation. In other words, the position of the real process object is found in part using information or location information about the real process object that is stored in the control system, or accessible by it.

Figure 5 shows a flowchart of steps in the general method in which steps:
- 50: Operator selects on the image display 10 a part of the process of interest in a process as shown by the 3D model 4,
- 51: Computer matches the selected process object in the 3D model to data representing the real process object, which data is held by the control system,
- 52: 3D model calculates line of sight, or position and orientation in space data for real process object based on the data or location data for the real process object held by, or accessible by, the control system, 53 One or more cameras selected and pointed at real process object based on 3D model line of sight or position calculated from the data or location data for the real process held by the control system,
- 54: One or more camera or video images of the real objects 2, 3 are generated and recorded,
- 56: The one or more images are registered to the 3D model image of the process,
- 58: The one or more video or camera images are superimposed on the 3D model image to a certain extent and the combined image comprising real and 3D model graphics displayed
- 59: The method is repeated as required.

In another embodiment information from a real image may be digitally processed to match a location of a position, a process object, or equipment in the process, or equipment close to the process in the real installation. The digital processing comprises matching the real image data to the 3D image by means of finding features in the real image and calculating which part of the 3D model image the real image is a picture of, the features being any from the group of: lines, edges, points, corners. This method may be combined with other methods for finding a position of a process object.

Methods of the invention may be supervised, controlled or carried out by one or more computer programs. One or more microprocessors (or processors or computers) comprise a central processing unit CPU connected to or comprised in one or more of the above described camera control system and/or DCS, which processors or computers perform the steps of the methods according to one or more aspects of the invention.

The computer program comprises computer program code elements or software code portions that make the computer or processor perform the methods using equations, algorithms, data, stored values, calculations, synchronisations and the like for the methods previously described, and for example in relation to the flowcharts of Figures 3-5, and/or to the graphic user interface shown on display 10 of Figure 2. A part of the program may be stored in a processor as above, but also in a ROM, RAM, PROM, EPROM or EEPROM chip or similar memory means. The or some of the programs in part or in whole may also be stored locally (or centrally) on, or in, a memory storage device of a control system The program may also in part be supplied or updated from a data network, including a public network such as the Internet.

It should be noted that while the above describes exemplifying embodiments of the invention, there are several variations and modifications which may be made to the disclosed solution without departing from the scope of the present invention as defined in the appended claims.

## Claims

1. A computer implemented method for remote inspection of infrastructure of an industrial process in an installation for extraction, processing and/or production of materials which said process is supervised by means of a distributed control system (7) arranged with one or more computers, and one or more computer display apparatus, wherein a said computer is arranged with a graphic computer 3D model of the infrastructure, the method **characterized by** the steps of:
receiving a selection by an operator of a representation of a part for inspection of the infrastructure in the 3D model, identifying the selected part of the real infrastructure based on the selection of the representation on the 3D model,
matching the selected representation on the 3D model to data representing a real process object in the installation, ,
receiving a real image comprising the real process object, and
superimposing the real image on corresponding parts of an image of the 3d model, thus graphically blending and displaying parts of the real image superimposed on parts of the image of the 3D model, and the whole combined in a display image.

2. A method according to claim 1, **characterized by** providing graphic data forming part of at least one of the one or more images of the real part of process infrastructure or apparatus from a stored image.

3. A method according to claim 1, **characterized by** calculating a calculated or transformed position of the selection of said representation on the 3D model image based on any information from the group of: a position in three dimensional space, an orientation, a line of sight of the camera, a position in three dimensional space of a structure, a distance between a camera and a process object, or of a robot manipulator, on which the camera is arranged.

4. A method according to claim 1, **characterized by** matching the selected said part of process infrastructure or apparatus based on the manipulation or selection of the 3D model to the position or location of the real part of process or apparatus by means of information held by a software process object of the part of process or apparatus implemented by said control system.

5. A method according to claim 1, **characterized by** matching the real image data to the 3D image by means of finding features in the real image and calculating which part of the 3D model image the real image is a picture of, the features being any from the group of: lines, edges, points, corners.

6. A method according to claim 1, **characterized by** calculating where the real image data points are, a position in 3-dimensional space, based in part on information about a line of sight between a camera and the real part of process or apparatus.

7. A method according to claim 1, **characterized by** providing one or more images or part images of said representation from said 3D model in the form of a visually separate graphic layer arranged superimposed in a transparent or semi-transparent way on a real image or part image.

8. A method according to claim 1, **characterized by** displaying a historical or archived real image graphically superimposed or overlaid or combined with the 3D image wherein the non real-time real image is presented in a visual mode graphically processed to make a contrast to a normal photo-realistic real image, which may processing be a change in any from the group of: hue, contrast, brightness, number of colours.

9. A method according to claim 1, **characterized by** providing at least one of the one or more images of the real part of process infrastructure or apparatus formed from image input from a camera or sensor adapted for any from the group of: visible light, thermal imaging, night vision.

10. A remote inspection system in an installation for extraction, processing and/or production of materials including infrastructure of an industrial process which said process is supervised by means of a distributed control system (7) arranged with one or more computers, and one or more computer display apparatus, wherein a said computer is arranged with a graphic computer 3D model of a said process infrastructure, **characterized by** the computer being arranged to receive a selection by an operator of a representation of a part of the infrastructure,
a computer or data processing apparatus programmed for identifying the selected part of the real infrastructure based on the selection of the representation on the 3D model,
and a computer or data processing apparatus programmed for matching the selected representation on the 3D model to data representing a real process object in the installation, to receive a real image of the real process object, and to superimpose the real image on corresponding parts of an image of the 3d model, thus graphically blending and displaying parts ot the real image superimposed on parts of the image of the 3D model, and the whole combined in a display image.

11. A system according to claim 10, **characterized by** comprising a computer or data processing apparatus programmed for receiving part of a real image and superimposing the real part image so received on corresponding parts of the model image, thus graphically blending and displaying parts of the real image superimposed on parts of model image, and the whole combined in the display image.

12. A system according to claim 10, **characterized by** comprising a computer or data processing apparatus programmed for providing graphic data forming part of at least one of the one or more images of the real part of process infrastructure or apparatus from a stored image.

13. A system according to claim 10, **characterized by** comprising a computer or data processing apparatus programmed for matching the selected said part of process infrastructure or apparatus based on the manipulation or selection of the 3D model to the position or location of the real part of process infrastructure or apparatus by means of information held by a software process object of the part of process or apparatus implemented by said control system.

14. A system according to claim 10, **characterized by** comprising one or more controllers for controlling one or more cameras of the industrial process to focus on said part of process infrastructure or apparatus at the position matched to information held by a software process object in said control system.

15. A system according to claim 10, **characterized by** comprising a computer or data processing apparatus programmed for generating a signal to control one or more cameras to point at the position or location of the real part of process infrastructure or apparatus and make an image.

16. A system according to any of claims 10-15, **characterized by** comprising at least one camera or sensor providing images of the real part of process infrastructure or apparatus which a camera or sensor is adapted for providing a image based on any from the group of: visible light, thermal imaging, night vision.

17. A computer program embodied on a computer readable medium which when read into a computer or processor will cause the computer or processor to carry out one or more instructions for a method providing according to according to claim 1.

## Patentansprüche

1. Computerimplementiertes Verfahren für die Ferninspektion der Infrastruktur eines industriellen Prozesses in einer Installation für die Extraktion, Verarbeitung und/oder Produktion von Materialien, wobei der Prozess mittels eines verteilten Steuersystems (7), das mit einem oder mehreren Computern und einer oder mehreren Computeranzeigevorrichtungen angeordnet ist, überwacht wird, wobei der Computer mit einem graphischen 3D-Computermodell der Infrastruktur angeordnet ist, wobei das Verfahren durch die folgenden Schritte gekennzeichnet ist:
Empfangen einer Auswahl durch eine Bedienungsperson einer Darstellung eines Teils für die Inspektion der Infrastruktur in dem 3D-Modell, Identifizieren des ausgewählten Teils der echten Infrastruktur basierend auf der Auswahl der Darstellung in dem 3D-Modell,
Anpassen der ausgewählten Darstellung in dem 3D-Modell an die Daten, die ein echtes Prozessobjekt in der Installation repräsentieren,
Empfangen eines echten Bildes, das das echte Prozessobjekt umfasst, und
Überlagern des echten Bildes über die entsprechenden Teile eines Bildes des 3D-Modells und folglich graphisches Mischen und Anzeigen der Teile des echten Bildes, die den Teilen des Bildes des 3D-Modells überlagert sind, und des Ganzen kombiniert in einem Anzeigebild.

2. Verfahren nach Anspruch 1, **gekennzeichnet durch** das Bereitstellen von Graphikdaten, die einen Teil von wenigstens einem des einem oder der mehreren Bilder des echten Teils der Prozessinfrastruktur oder der Vorrichtung bilden, von einem gespeicherten Bild.

3. Verfahren nach Anspruch 1, **gekennzeichnet durch** das Berechnen einer berechneten oder transformierten Position der Auswahl der Darstellung in dem 3D-Modellbild basierend auf irgendwelchen Informationen aus der folgenden Gruppe: einer Position im dreidimensionalen Raum, einer Orientierung, einer Sichtlinie der Kamera, einer Position im dreidimensionalen Raum einer Struktur, einem Abstand zwischen einer Kamera und einem Prozessobjekt oder einem Roboter-Manipulator, an dem die Kamera angeordnet ist.

4. Verfahren nach Anspruch 1, **gekennzeichnet durch** das Anpassen des ausgewählten Teils der Prozessinfrastruktur oder der Vorrichtung basierend auf der Manipulation oder der Auswahl des 3D-Modells an die Position oder den Ort des echten Teils des Prozesses oder der Vorrichtung mittels der **durch** ein Software-Prozessobjekt des Teils des Prozesses oder der Vorrichtung, das **durch** das Steuersystem implementiert ist, gehaltenen Informationen.

5. Verfahren nach Anspruch 1, **gekennzeichnet durch** das Anpassen der echten Bilddaten an das 3D-Bild mittels des Findens von Merkmalen in dem echten Bild und des Berechnens, von welchem Teil des 3D-Modellbildes das echte Bild ein Bild ist, wobei die Merkmale irgendeines aus der folgenden Gruppe sind: Linien, Kanten, Punkte und Ecken.

6. Verfahren nach Anspruch 1, **gekennzeichnet durch** das Berechnen, wo sich die echten Bilddatenpunkte befinden, einer Position im 3-dimensionalen Raum, teilweise basierend auf den Informationen über eine Sichtlinie zwischen einer Kamera und dem echten Teil des Prozesses oder der Vorrichtung.

7. Verfahren nach Anspruch 1, **gekennzeichnet durch** das Bereitstellen eines oder mehrerer Bilder oder Teilbilder der Darstellung aus dem 3D-Modell in der Form einer visuell separaten Graphikschicht, die auf eine transparente oder halbtransparente Art auf einem echten Bild oder Teilbild überlagert angeordnet ist.

8. Verfahren nach Anspruch 1, **gekennzeichnet durch** das Anzeigen eines historischen oder archivierten echten Bildes, das dem 3D-Bild graphisch überlagert oder auf das 3D-Bild graphisch gelegt oder mit dem 3D-Bild graphisch kombiniert ist, wobei das echte Nicht-Echtzeit-Bild in einer visuellen Betriebsart graphisch verarbeitet dargestellt wird, um einen Kontrast zu einem normalen photorealistischen echten Bild herzustellen, wobei die Verarbeitung eine Änderung in irgendeinem aus der folgenden Gruppe sein kann: Farbton, Kontrast, Helligkeit und Anzahl der Farben.

9. Verfahren nach Anspruch 1, **gekennzeichnet durch** das Bereitstellen wenigstens eines des einen oder der mehreren Bilder des echten Teils der Prozessinfrastruktur oder der Vorrichtung, die aus einem von einer Kamera oder einem Sensor eingegebenen Bild gebildet werden, die bzw. der für irgendeines aus der folgenden Gruppe ausgelegt ist: sichtbares Licht, Thermographie und Nachtsicht.

10. Ferninspektionssystem in einer Installation für die Extraktion, Verarbeitung und/oder Produktion von Materialien einschließlich der Infrastruktur eines industriellen Prozesses, wobei der Prozess mittels eines verteilten Steuersystems (7), das mit einem oder mehreren Computern und einer oder mehreren Computeranzeigevorrichtungen angeordnet ist, überwacht wird, wobei ein Computer mit einem graphischen 3D-Computermodell einer Prozessinfrastruktur angeordnet ist, **gekennzeichnet durch** den Computer, der dafür ausgelegt ist, eine Auswahl **durch** eine Bedienungsperson einer Darstellung eines Teils der Infrastruktur zu empfangen,
einen Computer oder eine Datenverarbeitungsvorrichtung, der bzw. die programmiert ist, den ausgewählten Teil der echten Infrastruktur basierend auf der Auswahl der Darstellung in dem 3D-Modell zu identifizieren,
und einen Computer oder eine Datenverarbeitungsvorrichtung, der bzw. die programmiert ist, die ausgewählte Darstellung in dem 3D-Modell an die Daten, die ein echtes Prozessobjekt in der Installation repräsentieren, anzupassen, das echte Bild des echten Prozessobjekts zu empfangen und das echte Bild den entsprechenden Teilen eines Bildes des 3D-Modells zu überlagern, und folglich die Teile des echten Bildes, die den Teilen des Bildes des 3D-Modells überlagert sind, und das Ganze kombiniert in einem Anzeigebild graphisch zu mischen und anzuzeigen.

11. System nach Anspruch 10, **dadurch gekennzeichnet, dass** es einen Computer oder eine Datenverarbeitungsvorrichtung umfasst, der bzw. die für das Empfangen eines Teils eines echten Bildes und das Überlagern des so empfangenen echten Teilbildes auf die entsprechenden Teile des Modellbildes und folglich das graphische Mischen und Anzeigen der Teile des echten Bildes, die den Teilen des Modellbildes überlagert sind, und des Ganzen kombiniert in dem Anzeigebild programmiert ist.

12. System nach Anspruch 10, **dadurch gekennzeichnet, dass** es einen Computer oder eine Datenverarbeitungsvorrichtung umfasst, der bzw. die für das Bereitstellen von Graphikdaten, die einen Teil von wenigstens einem des einen oder der mehreren Bilder des echten Teils der Prozessinfrastruktur oder der Vorrichtung bilden, aus einem gespeicherten Bild programmiert ist.

13. System nach Anspruch 10, **dadurch gekennzeichnet, dass** es einen Computer oder eine Datenverarbeitungsvorrichtung umfasst, der bzw. die für das Anpassen des ausgewählten Teils der Prozessinfrastruktur oder der Vorrichtung basierend auf der Manipulation oder der Auswahl des 3D-Modells an die Position oder den Ort des echten Teils der Prozessinfrastruktur oder der Vorrichtung mittels der durch ein Software-Prozessobjekt des Teils des Prozesses oder der Vorrichtung, das durch das Steuersystem implementiert ist, gehaltenen Informationen programmiert ist.

14. System nach Anspruch 10, **dadurch gekennzeichnet, dass** es eine oder mehrere Steuereinrichtungen zum Steuern einer oder mehrerer Kameras des industriellen Prozesses umfasst, auf um den Teil der Prozessinfrastruktur oder der Vorrichtung in der Position zu fokussieren, die an die durch ein Software-Prozessobjekt in dem Steuersystem gehalten Informationen angepasst ist.

15. System nach Anspruch 10, **dadurch gekennzeichnet, dass** es einen Computer oder eine Datenverarbeitungsvorrichtung umfasst, der bzw. die für das Erzeugen eines Signals programmiert ist, um eine oder mehrere Kameras zu steuern, um auf die Position oder den Ort des echten Teils der Prozessinfrastruktur oder der Vorrichtung zu zeigen und ein Bild aufzunehmen.

16. System nach einem der Ansprüche 10-15, **dadurch gekennzeichnet, dass** es wenigstens eine Kamera oder einen Sensor umfasst, die bzw. der Bilder des echten Teils der Prozessinfrastruktur oder der Vorrichtung bereitstellt, wobei eine Kamera oder ein Sensor dafür ausgelegt ist, ein Bild basierend auf irgendeinem aus der folgenden Gruppe bereitzustellen: sichtbares Licht, Thermographie und Nachtsicht.

17. Computerprogramm, das in einem computerlesbaren Medium verkörpert ist, das, wenn es in einen Computer oder einen Prozessor gelesen wird, den Computer oder den Prozessor veranlasst, einen oder mehrere Befehle für ein Verfahren nach Anspruch 1 auszuführen.

## Revendications

1. Procédé mis en oeuvre par ordinateur pour une inspection à distance d'une infrastructure d'un processus industriel dans une installation d'extraction, de traitement et/ou de production de matériaux, lequel dit processus est supervisé au moyen d'un système de commande distribué (7) conçu avec un ou plusieurs ordinateurs, et un ou plusieurs appareils d'affichage d'ordinateur, où un dit ordinateur est conçu avec une modélisation 3D d'ordinateur graphique de l'infrastructure, le procédé étant **caractérisé par** les étapes suivantes :
recevoir une sélection par un opérateur d'une représentation d'une partie pour une inspection de l'infrastructure dans la modélisation 3D, identifier la partie sélectionnée de l'infrastructure réelle sur la base de la sélection de la représentation sur la modélisation 3D,
faire correspondre la représentation sélectionnée sur la modélisation 3D aux données représentant un objet du processus réel dans l'installation,
recevoir une image réelle comprenant l'objet du processus réel, et
superposer l'image réelle sur des parties correspondantes d'une image de la modélisation 3D, affichant et mélangeant ainsi graphiquement des parties de l'image réelle superposées sur des parties de l'image de la modélisation 3D, et l'ensemble étant combiné dans une image d'affichage.

2. Procédé selon la revendication 1, **caractérisée en ce qu'**il délivre des données graphiques formant une partie d'au moins une de l'une ou plusieurs images de la partie réelle d'un appareil ou d'une infrastructure de processus à partir d'une image stockée.

3. Procédé selon la revendication 1, **caractérisée en ce qu'**il calcule une position transformée ou calculée de la sélection de ladite représentation sur l'image de modélisation 3D sur la base de toute information provenant du groupe suivant : une position dans un espace tridimensionnel, une orientation, une ligne de visée de la caméra, une position dans un espace tridimensionnel d'une structure, une distance entre une caméra et un objet de processus, ou d'un manipulateur de robot, sur lequel la caméra est installée.

4. Procédé selon la revendication 1, **caractérisé en ce qu'**il fait correspondre ladite partie sélectionnée d'un appareil ou d'une infrastructure de processus sur la base de la manipulation ou de la sélection de la modélisation 3D au niveau de la position ou de l'emplacement de la partie réelle d'un processus ou d'un appareil au moyen d'informations détenues par un objet de processus de logiciel de la partie de processus ou d'appareil mise en oeuvre par ledit système de commande.

5. Procédé selon la revendication 1 , caractérisé en qu'il fait correspondre les données d'image réelle à l'image 3D en trouvant des caractéristiques dans l'image réelle et en calculant pour quelle partie de l'image de la modélisation 3D l'image réelle est une représentation, les caractéristiques étant des caractéristiques quelconques du groupe suivant : des lignes, des bords, des points, des coins.

6. Procédé selon la revendication 1, **caractérisé en ce qu'**il calcule où les points de données d'image réelle se situent, une position dans un espace tridimensionnel, sur la base, en partie, d'informations concernant une ligne de visée entre une caméra et la partie réelle d'un processus ou d'un appareil.

7. Procédé selon la revendication 1, **caractérisé en ce qu'**il délivre une ou plusieurs images ou images de parties de ladite représentation à partir de ladite modélisation 3D sous la forme d'une couche graphique séparée visuellement disposée de manière superposée d'une façon transparente ou semi-transparente sur une image réelle ou une image de partie.

8. Procédé selon la revendication 1, caractérisé en qu'il affiche une image réelle archivée ou historique, graphiquement superposée ou recouverte ou combinée avec l'image 3D, où l'image réelle en temps non réel est présentée dans un mode visuel graphiquement traité pour produire un contraste par rapport à une image réelle photo-réaliste normale, lequel traitement peut être un changement de l'une quelconque des caractéristiques du groupe suivant : la nuance, le contraste, la luminosité, le nombre de couleurs.

9. Procédé selon la revendication 1, **caractérisé en ce qu'**il délivre au moins une de l'une ou plusieurs des images de la partie réelle d'un appareil ou d'une infrastructure de processus formées à partir d'une entrée d'image provenant d'une caméra ou d'un capteur adaptés pour l'une quelconque des caractéristiques du groupe suivant : la lumière visible, l'imagerie thermique, la vision nocturne.

10. Système d'inspection à distance dans une installation d'extraction, de traitement et/ou de production de matériaux comprenant une infrastructure d'un processus industriel, lequel dit processus est supervisé au moyen d'un système de commande distribué (7) conçu avec un ou plusieurs ordinateurs, et un ou plusieurs appareils d'affichage d'ordinateur, où un dit ordinateur est conçu avec une modélisation 3D d'ordinateur graphique d'une dite infrastructure de processus, **caractérisé en ce que** l'ordinateur est conçu pour recevoir une sélection par un opérateur d'une représentation d'une partie de l'infrastructure,
un ordinateur ou un appareil de traitement de données programmé pour identifier la partie sélectionnée de l'infrastructure réelle sur la base de la sélection de la représentation sur la modélisation 3D,
et un ordinateur ou un appareil de traitement de données programmé pour faire correspondre la représentation sélectionnée sur la modélisation 3D à des données représentant un objet de processus réel dans l'installation, pour recevoir une image réelle de l'objet de processus réel, et pour superposer l'image réelle sur des parties correspondantes d'une image de la modélisation 3D, affichant et mélangeant ainsi graphiquement des parties de l'image réelle superposées sur des parties de l'image de la modélisation 3D, et l'ensemble est combiné dans une image d'affichage.

11. Système selon la revendication 10, **caractérisé en ce qu'**il comprend un ordinateur ou un appareil de traitement de données programmé pour recevoir une partie d'une image réelle et superposer l'image réelle de partie ainsi reçue sur des parties correspondantes de l'image modèle, affichant et mélangeant ainsi graphiquement des parties de l'image réelle superposées sur des parties de l'image modèle, et l'ensemble est combiné dans l'image d'affichage.

12. Système selon la revendication 10, **caractérisé en ce qu'**il comprend un ordinateur ou un appareil de traitement de données programmé pour délivrer des données graphiques formant une partie d'au moins une de l'une ou plusieurs images de la partie réelle d'un appareil ou d'une infrastructure de processus à partir d'une image stockée.

13. Système selon la revendication 10, **caractérisé en ce qu'**il comprend un ordinateur ou un appareil de traitement de données programmé pour faire correspondre ladite partie sélectionnée d'un appareil ou d'une infrastructure de processus sur la base de la manipulation ou de la sélection de la modélisation 3D à la position ou à l'emplacement de la partie réelle d'un appareil ou d'une infrastructure de processus au moyen d'informations détenues par un objet de processus logiciel de la partie de processus ou d'appareil mise en oeuvre par ledit système de commande.

14. Système selon la revendication 10, **caractérisé en ce qu'**il comprend un ou plusieurs contrôleurs pour contrôler une ou plusieurs caméras du processus industriel pour se focaliser sur ladite partie d'un appareil ou d'une infrastructure de processus au niveau de la position assortie à des informations détenues par un objet de processus logiciel dans ledit système de commande.

15. Système selon la revendication 10, **caractérisé en ce qu'**il comprend un ordinateur ou un appareil de traitement de données programmé pour générer un signal pour contrôler une ou plusieurs caméras pour indiquer la position ou l'emplacement de la partie réelle d'un appareil ou d'une infrastructure de processus et créer une image.

16. Système selon l'une quelconque des revendications 10 à 15, **caractérisé en ce qu'**il comprend au moins une caméra ou un capteur délivrant des images de la partie réelle d'un appareil ou d'une infrastructure de processus, laquelle caméra ou lequel capteur étant conçu pour délivrer une image sur la base de l'une quelconque des caractéristiques du groupe suivant : la lumière visible, l'imagerie thermique, la vision nocturne.

17. Programme informatique placé sur un support lisible par ordinateur qui, lorsqu'il est lu par un ordinateur ou un processeur, amènera l'ordinateur ou le processeur à exécuter une ou plusieurs instructions pour un procédé selon la revendication 1.
